# EUROPÄISCHE PATENTANMELDUNG

(11) **EP 3 725 450 A2**
(43) Veröffentlichungstag der Anmeldung: **21.10.2020**
(21) Anmeldenummer: 20167887.7
(22) Anmeldetag: 03.04.2020
(51) Int. Cl.: B23K 20/04, B21B 1/46

(54) **VERFAHREN UND VORRICHTUNG ZUR HERSTELLUNG EINES MEHRSCHICHTIGEN VERBUNDMATERIALS**

(30) Priorität: 18.04.2019 DE 102019205673
(71) Anmelder: SMS Group GmbH, 40237 Düsseldorf (DE)
(72) Erfinder: Runkel, Thomas, 57074 Siegen (DE); Weyer, Axel, 42349 Wuppertal (DE); Wans, Jochen, 40667 Meerbusch (DE); Becker, Eberhard, 57271 Hilchenbach (DE)
(74) Vertreter: Klüppel, Walter

(57) **Zusammenfassung**

Die Erfindung betrifft eine Vorrichtung (100) und Verfahren zur Herstellung eines mehrschichtigen Verbundmaterials (1). Die Vorrichtung (100) umfasst eine erste Einrichtung (101), mittels der ein Grundwerkstoff aus Metall in Form von einzelnen Stücken (EG) in Richtung einer Zusammenführungseinrichtung (108) bewegbar ist, zumindest ein Walzgerüst (106), das in Linie mit der ersten Einrichtung (101) und stromabwärts hiervon angeordnet ist, und eine zweite Einrichtung (110) zum Bereitstellen von einzelnen Stücken eines Plattierungswerkstoffs aus Metall (EP), wobei einzelne Stücke des Plattierungswerkstoffs (EP) in Richtung der Zusammenführungseinrichtung (108) bewegbar sind, wobei die zweite Einrichtung (110; 110.1) in Linie mit dem Walzgerüst (106) und stromaufwärts hiervon angeordnet ist. Die Zusammenführungseinrichtung (108) ist zwischen einerseits der ersten bzw. zweiten Einrichtung (101; 110) und andererseits dem Walzgerüst (106) angeordnet, wobei mittels der Zusammenführungseinrichtung (108) ein Stück des Grundwerkstoffs (EG) und ein Stück des Plattierungswerkstoffs (EP) im warmen Zustand in Richtung zueinander bringbar sind. Das Walzgerüst (106) ist als Walzplattierungseinrichtung ausgebildet, mittels der ein Verbund gebildet aus den zusammengeführten Stücken des Grundwerkstoffs (EG) und des Plattierungswerkstoffs (EP) warmwalzbar ist, so dass damit durch Walzschweißen ein einziges mehrschichtiges Verbundmaterial (1) bestehend aus dem Grundwerkstoff und dem Plattierungswerkstoff entsteht.

## Beschreibung

Die Erfindung betrifft ein Verfahren zur Herstellung eines mehrschichtigen Verbundmaterials nach dem Oberbegriff der Ansprüche 1 und 6, und eine entsprechende Vorrichtung nach dem Oberbegriff der Ansprüche 5 und 11.

Nach dem Stand der Technik ist es bekannt, zumindest zwei Materialpartner aus Metall bzw. Stahl mittels Walz- bzw. Warmschweißen zu einem Verbundmaterial zusammenzufügen. Dies ist z.B. in EP 1 690 606 B1, EP 201 202 B1, EP 053 600 B1 und EP 04 063 B1 offenbart. Hiernach werden plattenförmige Bleche zunächst aufeinander gebracht, anschließend zu einem Plattenpaket miteinander verschweißt, und dann zu einem walzplattierten Warmband bzw. Verbundmaterial warmgewalzt. Eine solche Technologie bringt den Nachteil mit sich, dass der Zwischenschritt, wonach die aufeinander gelegten plattenförmigen Bleche zunächst miteinander verschweißt werden, einen Mehraufwand für den Produktionsablauf bedeutet und die maximale Produktionskapazität begrenzt.

Aus DE 101 24 594 B4 sind ein Verfahren zum Herstellen eines Verbundbandes aus Stahl durch Walzplattieren eines direkt gegossenen Stahlbandes sowie die Verwendung eines solchen Verbundbandes bekannt. Bei diesem Verfahren wird ein Kernband nach dem Zweirollenverfahren direkt gegossen und anschließend mit einem metallenen Plattierungsband mit korrosionsarmen bis korrosionsbeständigen Kaltbandeigenschaften plattiert. Dies erfolgt dadurch, dass auf das aus der Gießhitze kommende Kernband das Plattierungsband als Kaltband inline aufplattiert wird. Die Produktionsgeschwindigkeit und die daraus resultierende Wirtschaftlichkeit dieses Verfahrens sind wegen des Vergießens des Kernbands nach dem Zweirollenverfahren limitiert.

Ein Nachteil der Technologie gemäß DE 101 24 594 B4 besteht in einer nur losen Verbindung zwischen dem Kernband und dem Plattierungsband vor dem eigentlichen Walzplattieren, weil diese Bänder ohne einen verbindend wirkenden Kontakt in das Walzwerk eingeführt werden und sich somit insbesondere zu Beginn des Walzplattierens relativ zueinander verschieben können. Die Einfädelung der beiden Bänder in das Walzwerk begründet deshalb eine Störungsquelle. Ein weiterer Nachteil des Verfahrens gemäß DE 101 24 594 B4 ist durch eine Veränderung der Schichtdicke (Plattierungsbandstärke) und durch eine Anpassung der Stahlqualität des Plattierungsbandes gegeben. Diese Materialmerkmale des Plattierungsbandes können während der Produktion nämlich nicht flexibel eingestellt bzw. gewechselt werden. Schließlich ist bei der Technologie gemäß DE 101 24 594 B4 auch der Einsatz von Kaltband nachteilig, d.h. ein in einem Kaltwalzwerk gewalztes Band, weil dies zu erheblichen Dickenbeschränkungen für das Kaltband führt.

Ein weiteres Verfahren zum Herstellen eines Werkstoffverbundes in einer Walzanlage ist aus DE 10 2015 110 361 A1 bekannt, bei dem in einer Abfolge von mehreren Schritten ein Werkstoffverbund erzeugt wird. Zunächst erfolgt die Bereitstellung eines ersten Werkstücks und eines zweiten Werkstücks in Form eines provisorischen Verbunds. In einem anschließenden Schritt erfolgt ein Walzen des provisorischen Verbunds zur Bildung des Werkstoffverbundes, wobei zeitlich vor dem Walzen durch ein Vorwalzen eine flächige Verbindung zwischen dem ersten Werkstück und dem zweiten Werkstück erzeugt wird. Ein Nachteil des Verfahrens gemäß DE 10 2015 110 361 A1 besteht darin, dass kein kontinuierlicher Walzprozess durchgeführt wird - stattdessen sind umfangreiche zeitintensive Teilarbeitsschritte erforderlich. Im Ergebnis ist eine kostengünstige Herstellung eines plattierten Bandes nicht geben. Zusätzlich sind aufwändige qualitätssichernde Maßnahmen erforderlich. Hierzu zählen die Reinigung der Plattierungsflächen und die Maßnahme zur Verhinderung einer Oxidation bzw. ReOxidation der Plattierungsflächen, nämlich durch den bereits genannten Verfahrensschritt der Bildung eines provisorischen Verbundes durch das erste und zweite Werkstück.

Der Erfindung liegt die Aufgabe zugrunde, bei der Herstellung eines Metallbandes in Form eines mehrschichtigen Verbundmaterials die Materialperformance zu erhöhen, nämlich im Hinblick auf Oberflächenschutz, Gewicht und/oder Kombination von Eigenschaften verschiedener Materialpartner.

Diese Aufgabe wird durch ein Verfahren gemäß Anspruch 1 und Anspruch 6, als auch durch eine Vorrichtung mit den in den Ansprüchen 5 und 11 angegebenen Merkmalen gelöst. Vorteilhafte Weiterbildungen der Erfindung sind Gegenstand der abhängigen Ansprüche.

Ein erfindungsgemäßes Verfahren nach der vorliegenden Erfindung dient zur Herstellung eines mehrschichtigen Verbundmaterials, und umfasst folgende Schritte:
(i) Bereitstellen eines Grundwerkstoffs aus Metall, der in Form von einzelnen Stücken in Richtung einer Zusammenführungseinrichtung bewegt wird,
(ii) Bereitstellen zumindest eines Plattierungswerkstoffs aus Metall, der in Form von einzelnen Stücken in Richtung der Zusammenführungseinrichtung bewegt wird,
(iii) Zusammenführen eines einzelnen Stücks des Grundwerkstoffs und eines einzelnen Stücks des Plattierungswerkstoffs im Bereich der Zusammenführungseinrichtung im warmen Zustand, und
(iv) Warmwalzen der in Richtung zueinander gebrachten Stücke des Grundwerkstoffs und des Plattierungswerkstoffs, so dass damit durch Walzschweißen ein einziges stückförmiges mehrschichtiges Verbundmaterial bestehend aus dem Grundwerkstoff und dem Plattierungswerkstoff gebildet wird,
wobei die einzelnen Stücke des Plattierungswerkstoffs gemäß Schritt (ii) stromaufwärts der Zusammenführungseinrichtung mittels Trennen, vorzugsweise durch Schneiden oder Brennen, aus einer Bramme gebildet werden, die sich aus einem mit einer Bandgießeinrichtung oder mit einer Rollengießeinrichtung erzeugten Strang durch Erstarren gebildet hat.

In gleicher Weise sieht die Erfindung eine Vorrichtung zur Herstellung eines mehrschichtigen Verbundmaterials, umfassend eine erste Einrichtung, mittels der ein Grundwerkstoff aus Metall in Form von einzelnen Stücken in Richtung einer Zusammenführungseinrichtung bewegbar ist, zumindest ein Walzgerüst, das in Linie mit der ersten Einrichtung und stromabwärts hiervon angeordnet ist, und eine zweite Einrichtung zum Bereitstellen von einzelnen Stücken eines Plattierungswerkstoffs aus Metall, wobei einzelne Stücke des Plattierungswerkstoffs in Richtung der Zusammenführungseinrichtung bewegbar sind, wobei die zweite Einrichtung in Linie mit dem Walzgerüst und stromaufwärts hiervon angeordnet ist. Die Zusammenführungseinrichtung ist zwischen einerseits der ersten bzw. zweiten Einrichtung und andererseits dem Walzgerüst angeordnet, wobei mittels der Zusammenführungseinrichtung ein Stück des Grundwerkstoffs und ein Stück des Plattierungswerkstoffs im warmen Zustand in Richtung zueinander gebracht werden können. Das Walzgerüst ist als Walzplattierungseinrichtung ausgebildet, mittels der ein Verbund gebildet aus den zusammengeführten Stücken des Grundwerkstoffs und des Plattierungswerkstoffs warmgewalzt werden kann, so dass damit durch Walzschweißen ein einziges mehrschichtiges Verbundmaterial bestehend aus dem Grundwerkstoff und dem Plattierungswerkstoff entsteht. Die zweite Einrichtung ist durch eine Bandgießeinrichtung oder durch eine Rollengießeinrichtung ausgebildet, mit der durch Gießen des Plattierungswerkstoffs ein Strang erzeugt wird, aus dem sich durch Erstarren eine Bramme bildet, wobei zwischen einerseits der Bandgieß- bzw. Rollengießeinrichtung und andererseits der Zusammenführungseinrichtung eine Schere angeordnet ist, mittels der die im Wesentlichen erstarrte Bramme stromaufwärts der Zusammenführungseinrichtung zu einzelnen Stücken des Plattierungswerkstoffs vereinzelt werden kann.

Mit der soeben genannten Ausführungsform der Erfindung wird der Vorteil erzielt, dass bei der Bereitstellung des zumindest einen Plattierungswerkstoffs gemäß Schritt (ii) und bei entsprechendem Einsatz der Bandgieß- bzw. Rollengießeinrichtung einerseits die Gießhitze ausgenutzt wird, wodurch dieser Materialpartner im Hinblick auf das anschließende Warmwalzen zusammen mit dem Grundwerkstoff weniger oder gar nicht weiter aufzuheizen ist, und dass andererseits durch das Trennen bzw. durch den Einsatz z.B. von einer Schere der Materialpartner in Form des Plattierungswerkstoffs in einzelnen Stücken bereitgestellt werden kann, nämlich in Anpassung an die zugeführten bzw. bereitgestellten einzelnen Stücke des Grundwerkstoffs.

Ein erfindungsgemäßes Verfahren nach einer weiteren Ausführungsform der vorliegenden Erfindung, dem eine eigenständige Bedeutung zukommt, dient zur Herstellung eines kontinuierlichen bandförmigen mehrschichtigen Verbundmaterials, und umfasst folgende Schritte:
(i) Erzeugen eines kontinuierlichen Strangs insbesondere aus Stahl mit einer ersten Gießmaschine, wobei dieser Strang bzw. eine daraus durch Erstarren gebildete Bramme im Wesentlichen horizontal in Richtung einer Zusammenführungseinrichtung bewegt wird,
(ii) Erzeugen eines weiteren kontinuierlichen Strangs aus Metall mit einer zweiten Gießmaschine,
(iii) Zusammenführen von Brammen, die sich aus den Strängen, die mit der ersten Gießmaschine und mit der zweiten Gießmaschine erzeugt worden sind, durch Erstarren gebildet haben, im warmen Zustand, wobei die mit der zweiten Gießmaschine erzeugte Bramme im Bereich der Zusammenführungseinrichtung von oben in Richtung einer oberen Seite der mit der ersten Gießmaschine erzeugten Bramme bewegt wird, und
(iv) Warmwalzen eines Verbunds gebildet aus den zusammengeführten Brammen, so dass damit kontinuierlich durch Walzschweißen ein einziges kontinuierliches bandförmiges Verbundmaterial entsteht,
wobei die zweite Gießmaschine durch eine Bandgießeinrichtung oder durch eine Rollengießeinrichtung ausgebildet ist, mit der ein kontinuierlicher Strang aus Metall erzeugt wird, der vor dem Schritt (iii) im Wesentlichen vollständig erstarrt ist.

In gleicher Weise sieht die Erfindung eine Vorrichtung zur Herstellung eines kontinuierlichen bandförmigen mehrschichtigen Verbundmaterials vor, umfassend eine erste Gießmaschine, mit der ein kontinuierlicher Strang insbesondere aus Stahl erzeugt wird, zumindest ein Walzgerüst, das in Linie mit der ersten Gießmaschine und stromabwärts hiervon angeordnet ist, wobei eine durcherstarrte Bramme des mit der ersten Gießmaschine erzeugten Strangs warmwalzbar ist, eine zweite Gießmaschine, mit der ein weiterer kontinuierlicher Strang aus Metall erzeugt wird, wobei diese zweite Gießmaschine in Linie mit dem Walzgerüst und stromaufwärts hiervon angeordnet ist, und eine Zusammenführungseinrichtung, die zwischen einerseits den Gießmaschinen und andererseits dem Walzgerüst angeordnet ist. Mittels der Zusammenführungseinrichtung können eine Bramme, die sich aus einem mit der ersten Gießmaschine erzeugten Strang durch Erstarren gebildet hat, und eine Bramme, die sich aus einem mit der zweiten Gießmaschine erzeugten Strang durch Erstarren gebildet hat, im warmen Zustand in Richtung zueinander gebracht werden. Das Walzgerüst ist als Walzplattierungseinrichtung ausgebildet, mittels der ein Verbund gebildet aus den zusammengeführten Brammen warmgewalzt werden kann, so dass damit durch Walzschweißen ein einziges kontinuierliches bandförmiges Verbundmaterial entsteht. Die zweite Gießmaschine ist durch eine Bandgießeinrichtung oder durch eine Rollengießeinrichtung ausgebildet. Vorzugsweise kann hierbei vorgesehen sein, dass die Bandgießeinrichtung oder Rollengießeinrichtung oberhalb der sich aus dem durch die erste Gießmaschine erzeugten Strang durch Erstarren gebildeten Bramme angeordnet ist, so dass die Bramme, die sich aus dem durch die Bandgießeinrichtung oder Rollengießeinrichtung erzeugten Strang durch Erstarren gebildet hat, im Bereich der Zusammenführungseinrichtung von oben in Richtung einer oberen Seite der durch die erste Gießmaschine erzeugten Bramme bewegt werden kann.

Mit der zuletzt genannten Ausführung der vorliegenden Erfindung wird der Vorteil erzielt, dass es bei der Herstellung eines kontinuierlichen bandförmigen Verbundmaterials aufgrund der Ausgestaltung der zweiten Gießmaschine in Form einer Bandgieß- oder Rollengießeinrichtung möglich ist, bestimmte Materialien bzw. Werkstoffe zu verarbeiten und hieraus einen kontinuierlichen Strang aus Metall zu erzeugen, der anschließend mit dem mittels der ersten Gießmaschine erzeugten kontinuierlichen Strang zunächst zusammengeführt und dann mittels Warmwalzen bzw. Warmschweißen zu einem Verbundmaterial verbunden wird. Somit können für die zu verbindenden Materialpartner ggf. unterschiedliche Material- bzw. Stahlgüten verarbeitet werden.

Im Sinne der vorliegenden Erfindung sind die nachstehenden Aspekte wie folgt zu verstehen:
- Das Merkmal "Bramme" ist dahingehend zu verstehen, dass es sich hierbei um einen gegossenen Strang aus Metall handelt, der bereits weitgehend vollständig durcherstarrt ist, so dass ein Walzen dieser Bramme möglich ist, ohne dass dabei die Gefahr besteht, dass noch flüssige Anteile des Metalls aus dem Innern nach außen herausgequetscht werden. Eine solche Bramme kann als ein Endlos-Profil ausgebildet sein, das mittels einer Gießmaschine hergestellt bzw. gegossen wird, z.B. durch Stranggießen oder durch Einsatz einer Bandgießeinrichtung oder Rollengießeinrichtung.
- Das Merkmal "Zusammenführen von einzelnen Stücken eines Grund- bzw. Plattierungswerkstoffs oder von Brammen", wie es z.B. für den Schritt (iii) eines erfindungsgemäßen Verfahrens definiert ist, ist dahingehend zu verstehen, dass hierbei die einzelnen Stücke bzw. Brammen in Richtung zueinander gebracht werden. Dies kann bedeuten, dass die einzelnen Stücke bzw. Brammen sich während des Schritts (iii) bzw. an dessen Ende noch nicht berühren bzw. kontaktieren. Jedenfalls werden die einzelnen Stücke bzw. Brammen durch das Zusammenführen gemäß Schritt (iii), das in der Zusammenführungseinrichtung durchgeführt wird, derart in Richtung zueinander gebracht, dass anschließend, nämlich in Schritt (iv) eines erfindungsgemäßen Verfahrens bzw. in der Walzplattierungseinrichtung der erfindungsgemäßen Vorrichtung, ein Verbund gebildet aus den zusammengeführten Stücken bzw. Brammen warmgewalzt werden kann.
- Das Attribut "warm" bzw. die Definition "im warmen Zustand", das bzw. die im Zusammenhang mit dem Zusammenführen gemäß Schritt (iii) genannt ist, bezieht sich auf die Temperatur der Materialpartner bzw. der einzelnen Stücke bzw. Brammen, und ist dahingehend zu verstehen, dass diese Temperatur oberhalb der Rekristallisationstemperatur (z.B. 720°C für Stahl) liegt.

Der Erfindung liegt die wesentliche Erkenntnis zugrunde, dass mehrere Ausgangsmaterialien bzw. Materialpartner übereinander gebracht und miteinander mittels Walzschweißen verbunden werden, wobei mindestens ein Materialpartner bzw. eine Materiallage aus einem in einer Bandgieß- oder Rollengießeinrichtung produzierten Material besteht. Das mit dem Bandgießmaterial zu verbindende Material ist vorzugsweise Material, welches in einer Warmbandstrasse als Coils erzeugt wurde. Es kann aber auch eine Verbindung mit anderweitig erzeugten Materialien erfolgen, z.B. Stranggussmaterial oder Einzelbrammen. Beim Walzschweißen werden dann diese Materialpartner zu einem Verbundmaterial miteinander verbunden und geeignet ausgewalzt, ohne dass es zu einer zwischenzeitlichen Abkühlung des Materials, welches mit der Bandgießanlage hergestellt wird, kommt. Dies bedeutet, dass bei Anwendung bzw. Durchführung der vorliegenden Erfindung eine Bandgießanlage und zumindest ein Walzplattiergerüst direkt hinter einander angeordnet sind, was auch unter der Bezeichnung "Inline-Verfahren" bekannt ist. Hierbei wird das in der Bandgießanlage erzeugte Material dann ohne zwischenzeitliche Abkühlung auf Raumtemperatur unmittelbar nach dem Verlassen der Bandgießanlage mittels Walzschweißen im warmen Zustand mit zumindest einem anderen Material bzw. Materialpartner plattiert bzw. verbunden.

Hinsichtlich der erfindungsgemäßen Vorrichtungen zur Herstellung eines mehrschichtigen Verbundmaterials ist festzustellen, dass hierbei stets zumindest eine Bandgieß- bzw. Rollengießeinrichtung zum Einsatz kommt. Insoweit können solche erfindungsgemäßen Vorrichtungen auch als Bandgieß-Plattieranlage bezeichnet werden.

In vorteilhafter Weiterbildung der Erfindung kann eine Schutzgas-Einrichtung vorgesehen sein, welche die zweite Einrichtung bzw. Gießmaschine in Form der Bandgieß- oder Rollengießeinrichtung vollständig umschließt und/oder die als Teil der Zusammenführungseinrichtung und/oder als Teil der Walzplattierungseinrichtung vorgesehen ist. Eine solche Schutzgas-Einrichtung verhindert dank der darin herrschenden Schutzgasatmosphäre wirkungsvoll ein Verzundern des durchlaufenden Materials, was einerseits die Notwendigkeit eines Entzunderns obsolet werden lässt und andererseits die Qualität der Verbindung zwischen den jeweiligen Materialpartnern maßgeblich verbessert.

In vorteilhafter Weiterbildung der Erfindung kann zwischen einerseits der zweiten Einrichtung bzw. Gießmaschine in Form der Bandgieß- oder Rollengießeinrichtung und andererseits der Zusammenführungseinrichtung zumindest ein Walzgerüst angeordnet sein. Mit einem solchen Walzgerüst kann beispielsweise eine Bramme, die sich aus dem mit der Band- oder Rollengießeinrichtung erzeugten Strang des Plattierungswerkstoffs bzw. aus dem mit der zweiten Gießmaschine in Form der Band- oder Rollengießeinrichtung erzeugten Strang durch Erstarren gebildet hat, vor dem Zusammenführen mit zumindest einem anderen Materialpartner gewalzt werden. Einem solchen Walzgerüst kann eine Ausgleichfunktion zukommen, um beispielsweise eine Dicke des durchlaufenden Materials zur Geschwindigkeitsanpassung zu reduzieren.

In vorteilhafter Weiterbildung der Erfindung kann stromaufwärts der Zusammenführungseinrichtung zumindest eine Entzunderungseinrichtung angeordnet sein. Mit einer solchen Entzunderungseinrichtung wird zumindest ein Materialpartner, vorzugsweise alle Materialpartner (= Grundwerkstoff + Plattierungswerkstoff) geeignet an ihren Oberflächen entzundert, um damit die Verbindungsqualität beim anschließenden Warmwalzen bzw. Walzschweißen zu verbessern. Optional können auch mehrere solcher Entzunderungseinrichtungen vorgesehen sein, je nach Positionierung und Anzahl von Materialpartnern, die der Zusammenführungseinrichtung zugeführt werden.

Das erfindungsgemäße Verbinden von zumindest zwei Materialpartnern bzw. Werkstoffen zu einem Verbundmaterial mittels Walzschweißen erfolgt vorzugsweise mit warmem Material (z.B. mit einer Temperatur von 800 °C - 1.300 °C). Alternativ hierzu kann das Walzschweißen auch mit kaltem Material (mit einer Temperatur von < 800 °C) oder einer Kombination hiervon (d.h. "warm" + "kalt", mit den soeben genannten Temperaturen bzw. -bereichen) erfolgen.

Mittels der vorliegenden Erfindung kann der Einsatzbereich für Material aus Bandgießanlagen vorteilhaft erweitert werden. Beispielsweise kann hochwertiges Material aus einer Bandgießanlagen mit einem kostengünstigeren Trägermaterial verbunden werden. In gleicher Weise können auch Materialien mit unterschiedlichen Eigenschaften hinsichtlich Korrosionsbeständigkeit, Härte, Oberflächenerscheinung usw. miteinander kombiniert werden.

Weitere Vorteile der vorliegenden Erfindung ergeben sich die folgende Aspekte:
- Produktion mehrlagiger Bänder mit Material aus Bandgießanlagen.
- Erzeugung von walzplattiertem Warmband durch Verschweißen unterschiedlicher Stahlgüten aus den einzelnen Zuführeinrichtungen. Dies ist z.B. sinnvoll bei Einsatz von drei oder mehr Zuführeinrichtungen und Verwendung von Stählen mit den gleichen Eigenschaftsprofilen in der obersten und untersten Lage. Das gleiche gilt auch für eine Kombination aus Stahlgüten mit NE-Güten, bzw. reinen NE-Güten.
- Höhere Produktionsleistung durch gekoppelten Inline-Prozess.
- Höhere Wirtschaftlichkeit durch kompakte Anlagenanordnung.
- Höhere Wirtschaftlichkeit durch Entfall der Wiedererwärmung des Bandgießmaterials.
- Erweiterung der zu produzierenden Bandsorten mit unterschiedlichen Eigenschaften.
- Erzeugung von walzplattierten Grobblechen.
- Erzeugung von walzplattierten Bändern.
- Erzeugung von walzplattierten Coils.
- Neue Anwendungen für Bandgießmaterial.
- Einsatz eines Automationssystems zur Erfüllung neuer Anforderungen, wie
   ∘ Abgleich der Transportgeschwindigkeit der einzelnen Stränge, sowie der Welding-Gerüste. Erfassung und Anpassung der Transportgeschwindigkeiten. Beispiele von Stellgliedern:
      - Änderung Gießgeschwindigkeiten,
      - Änderung Abwickelgeschwindigkeiten,
      - Änderung Liquid Core Reduction,
      - Dickenreduzierung in der Gießmaschine,
      - Dickenreduzierung im Auslaufbereich,
      - Geschwindigkeit Welding-Stand.
   ∘ Abgleich und Berücksichtigung der Temperaturen der einzelnen Stränge. Erfassung und Anpassung der Temperaturen. Beispiele von Stellgliedern:
      - Gießgeschwindigkeit,
      - Strangkühlung in der Gießeinrichtung,
      - Aktive Kühlung im gegossenen Strang,
      - Erwärmungs- oder Ausgleichsofen,
      - Induktive Heizung,
      - Abwickel- und Walzgeschwindigkeit,
      - Vertrimmen der Geschwindigkeiten von Ober- und Unterwalzen in den Welding-Stands.
- Notfalleinrichtungen und -konzepte, wie zum Beispiel:
   ∘ Walzen mit nur einem der Zuführstränge (Stranggießmaschine, Bandgießmaschine, Abwickeleinrichtungen...) einschließlich Übergangsprozedere,
   ∘ Trenneinrichtungen zur Einleitung eines kontrollierten Gießendes,
   ∘ Austrageeinrichtungen für das Austragen nicht verwertbaren Materials,
   ∘ Haspeleinrichtungen für das Aufnehmen nicht verwertbaren Materials.

Nachstehend sind bevorzugte Ausführungsbeispiele der Erfindung anhand einer schematisch vereinfachten Zeichnung im Detail beschrieben. Es zeigen:
- Fig. 1: eine prinzipielle Seitenansicht einer erfindungsgemäßen Vorrichtung gemäß einer ersten Ausführungsform,
- Fig. 2: eine prinzipielle Seitenansicht einer erfindungsgemäßen Vorrichtung gemäß einer zweiten Ausführungsform,
- Fig. 3: eine prinzipielle Seitenansicht einer erfindungsgemäßen Vorrichtung gemäß einer modifizierten zweiten Ausführungsform,
- Fig. 4: eine prinzipielle Seitenansicht einer erfindungsgemäßen Vorrichtung gemäß einer weiter modifizierten zweiten Ausführungsform,
- Fig. 5: eine prinzipielle Seitenansicht einer erfindungsgemäßen Vorrichtung gemäß einer weiter modifizierten zweiten Ausführungsform, und
- Fig. 6: eine prinzipielle Seitenansicht einer erfindungsgemäßen Vorrichtung gemäß einer dritten Ausführungsform.

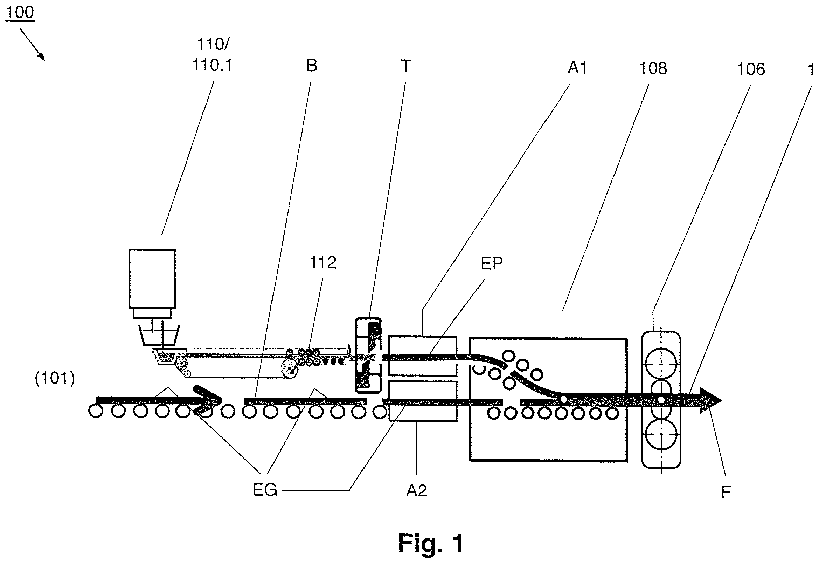

Nachstehend sind unter Bezugnahme auf die Fig. 1 bis 6 bevorzugte Ausführungsformen einer erfindungsgemäßen Vorrichtung und Komponenten hiervon erläutert, wobei diese Vorrichtung zur Herstellung eines mehrschichtigen Verbundmaterials dient. Die Zeichnung ist lediglich vereinfacht und insbesondere ohne Maßstab dargestellt.

An dieser Stelle wird gesondert darauf hingewiesen, dass gleiche Merkmale in der Zeichnung jeweils mit gleichen Bezugszeichen versehen sind. Des Weiteren sind bei den verschiedenen Ausführungsformen der Erfindung einander entsprechende Merkmale jeweils gleich bezeichnet und durch "100" hochaddiert. Beispielsweise umfassen alle Ausführungsformen 100, 200, 300 jeweils zumindest ein Walzgerüst in Form einer Walzplattierungseinrichtung, die mit 106, 206 bzw. 306 bezeichnet ist.

Fig. 1 zeigt eine prinzipiell vereinfachte Seitenansicht der Vorrichtung 100 nach einer ersten Ausführungsform.

Die Vorrichtung 100 umfasst eine lediglich mit dem Bezugszeichen "101" angedeutete erste Einrichtung, mittels der ein Grundwerkstoff aus Metall in Form von einzelnen Stücken EG bereitgestellt wird. Hierbei können die einzelnen Stücke des Grundwerkstoffs aus gegossenen Brammen oder gewalzten Brammen bestehen.

Des Weiteren umfasst die Vorrichtung 100 eine Zusammenführungseinrichtung 108.

Wie in Fig. 1 durch einen Pfeil angedeutet, werden die einzelnen Stücke EG des Grundwerkstoffs auf einer Bandtransportlinie B in Richtung der Zusammenführungseinrichtung 108 (in der Bildebene gemäß Fig. 1 von links nach rechts) transportiert.

Die Vorrichtung 100 umfasst des Weiteren zumindest ein Walzgerüst 106, das in Linie mit der ersten Einrichtung 101 und - in der Bewegungsrichtung der einzelnen Stücke EG des Grundwerkstoffs gesehen - stromabwärts hiervon angeordnet ist. Die Funktionsweise dieses Walzgerüsts 106 ist nachfolgend noch gesondert erläutert

Die Vorrichtung 100 umfasst eine zweite Einrichtung 110, mittels der einzelne Stücke EP eines Plattierungswerkstoffs aus Metall bereitgestellt werden. Diese zweite Einrichtung 110 ist ebenfalls in Linie mit dem Walzgerüst 106 und stromaufwärts hiervon angeordnet. Im gezeigten Beispiel ist die zweite Einrichtung in Form einer Bandgießeinrichtung 110.1 ausgebildet.

In Linie zwischen der Bandgießeinrichtung 110.1 und der Zusammenführungseinrichtung 108 ist eine Trenneinrichtung T insbesondere in Form einer Schere (alternativ: Brenner) angeordnet.

Mit der Bandgießeinrichtung 110.1 wird durch Gießen ein Strang bestehend aus dem Plattierungswerkstoff erzeugt, wobei sich aus diesem Strang durch Erstarren eine Bramme 112 bildet. Mittels der Trenneinrichtung T wird die Bramme 112 geeignet vereinzelt, nämlich in Anpassung an eine Länge der jeweiligen einzelnen Stücke EG des Grundwerkstoffs. Diese vereinzelten bzw. einzelnen Stücke EP des Plattierungswerkstoffs sind sodann ebenfalls in Richtung der Zusammenführungseinrichtung 108 (in Fig.1 von links nach rechts) bewegbar, vorzugsweise synchron zu den einzelnen Stücken des Grundwerkstoffs EG, die wie erläutert ebenfalls in Richtung der Zusammenführungseinrichtung 108 bewegt werden.

Gemäß einer (nicht gezeigten) Variante der Ausführungsform von Fig. 1 kann die zweite Einrichtung auch in Form einer Rollengießeinrichtung ausgebildet sein. Hierbei dient eine solche Rollengießeinrichtung bei der erfindungsgemäßen Vorrichtung 100 den gleichen Zweck wie die Bandgießeinrichtung 100.1, nämlich wie erläutert zum Bereitstellen von einzelnen Stücken eines Plattierungswerkstoffs aus Metall.

In der Zusammenführungseinrichtung 108 werden dann einzelne Stücke EG des Grundwerkstoffs und einzelne Stücke EP des Plattierungswerkstoffs im warmen Zustand zusammengeführt.

Stromabwärts von der Zusammenführungseinrichtung 108 ist das Walzgerüst 106 angeordnet, wobei die zusammengeführten einzelnen Stücke jeweils des Grundwerkstoffs EG als auch des Plattierungswerkstoffs EP dann gemeinsam dieses Walzgerüst 106 durchlaufen. Hierbei erfüllt das Walzgerüst die Funktion einer Walzplattierungseinrichtung, mit der die in Richtung zueinander gebrachten Stücke des Grundwerkstoffs EG und des Plattierungswerkstoffs EP warmgewalzt werden, sodass damit durch Walzschweißen ein einziges stückförmiges mehrschichtiges Verbundmaterial 1 gebildet wird, das aus dem Grundwerkstoff und dem Plattierungswerkstoff besteht.

In Fig. 1 ist durch den Pfeil "F" rechts von der Walzplattierungseinrichtung 106 eine Förderrichtung angedeutet, in der das Verbundmaterial 1, welches wie erläutert durch Walzschweißen mit der Walzplattierungseinrichtung 106 gebildet worden ist, für mögliche weitere Bearbeitungsschritte transportiert bzw. bewegt wird.

Bei der Vorrichtung 100 von Fig. 1 ist stromaufwärts der Zusammenführungseinrichtung 108 ein sogenannter Auslaufbereich A vorgesehen. Hierbei sind mit "A1" "A2" Einrichtungen bezeichnet, die in diesem Auslaufbereich A angeordnet sind. Bei der Einrichtung A1 kann es sich um eine Erwärmungseinrichtung (z.B. Erwärmungsofen, Ausgleichsofen, induktive Heizung) handeln, mit der eine Temperatur der einzelnen Stücke des Plattierungswerkstoffs EP gezielt beeinflusst bzw. erhöht werden kann, bevor ein einzelnes Stück des Plattierungswerkstoffs EP dann in die Zusammenführungseinrichtung 108 eintritt. In gleicher Weise kann es sich bei der Einrichtung A2 ebenfalls um eine solche Erwärmungseinrichtung (z.B. Erwärmungsofen, Ausgleichsofen, induktive Heizung) handeln, um damit die Temperatur der einzelnen Stücke des Grundwerkstoffs EG vor dem Eintreten in die Zusammenführungseinrichtung 108 zu beeinflussen.

Ergänzend oder alternativ kann es sich bei den Einrichtungen im Auslaufbereich A um folgende Komponenten handeln:
∘ Trenneinrichtungen (Schere, Brenner);
∘ Kaltstrangführungseinrichtungen;
∘ Einrichtungen zur Kaltstrangherausnahme;
∘ Schrottabfuhreinrichtungen;
∘ Führungseinrichtungen, Seitenführungseinrichtungen, Treiber;
∘ Ausgleichswalzgerüste (Dickenreduzierung zur Geschwindigkeitsanpassung);
∘ Einrichtungen für die Entfernung von Zunder (Wasserstrahlen, mechanisch, bürsten, schleifen, strahlen, hobeln, fräsen, brechen);
∘ Einrichtungen für das Säubern der Oberflächen von unerwünschten gasförmigen, flüssigen oder festen Verunreinigungen (z.B. bürsten, schleifen, strahlen, hobeln, fräsen);
∘ Einrichtungen für das Aktivieren und/oder Passivieren der Oberflächen (chemisch-physikalisch: Beizen; mechanisch: Bürsten);
∘ Besäumeinrichtungen;
∘ Einhausung mit Schutzgas-Atmosphäre zur Verhinderung von Zunderbildung;
∘ Einrichtungen zum Anfasen der Ränder der einander zugeordneten Oberflächen;
∘ Materialschleife zum Ausgleich von Geschwindigkeitsschwankungen beim Materialtransport aus der Gießeinrichtung; und/oder
∘ Haspeleinrichtungen für das Aufnehmen nicht verwertbaren Materials.

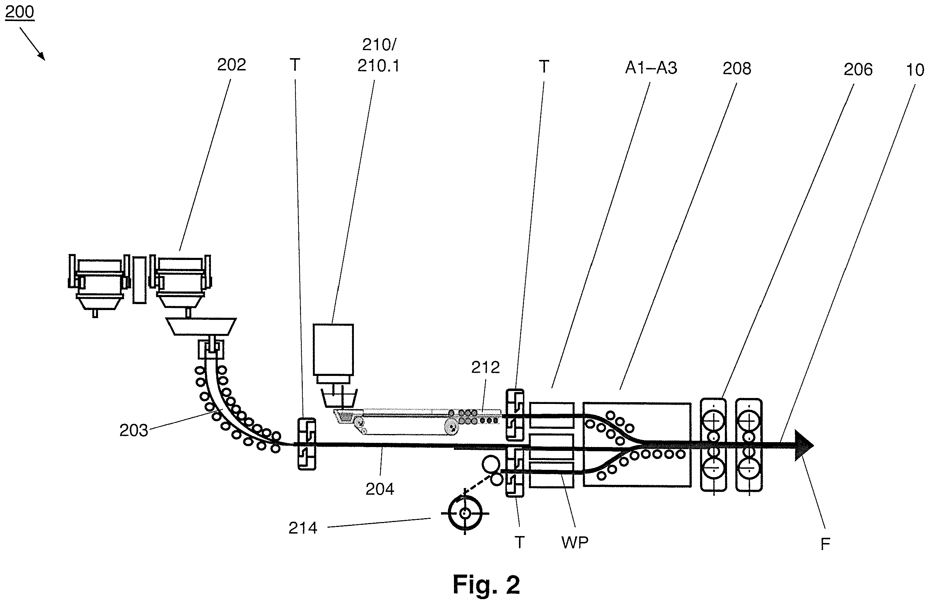

In den Fig. 2-5 sind jeweils prinzipiell vereinfachte Seitenansichten einer erfindungsgemäßen Vorrichtung 200 nach einer zweiten Ausführungsform gezeigt. Hierzu im Einzelnen folgende Erläuterungen:
Die Vorrichtung 200 gemäß der Darstellung von Fig. 2 umfasst eine erste Gießmaschine 202, mit der ein kontinuierlicher Strang 203 insbesondere aus Stahl erzeugt wird. Aus diesem Strang 203 bildet sich eine erste Bramme 204, die auf einem (nicht gezeigten) Rollgang im Bildbereich von Fig. 2 von links nach rechts bewegt bzw. transportiert wird.

Die Vorrichtung 200 umfasst des Weiteren zumindest ein Walzgerüst 206, das in Linie mit der ersten Gießmaschine 202 und - in der Bewegungsrichtung der ersten Bramme 204 gesehen - stromabwärts hiervon angeordnet ist, eine zweite Gießmaschine 210, und eine Zusammenführungseinrichtung 208. Bei der in Fig. 2 gezeigten Ausführungsform sind stromabwärts der Zusammenführungseinrichtung 208 zwei Walzgerüste 206 angeordnet, denen - wie nachfolgend noch erläutert - in gleicher Weise wie bei der Fig. 1 die Funktion einer Walzplattierungseinrichtung zukommt.

Mit der zweiten Gießmaschine 210 wird ein weiterer kontinuierlicher Strang aus Metall erzeugt, aus dem sich durch Erstarren eine zweite Bramme 212 bildet. Die zweite Gießmaschine 210 ist bei der gezeigten Ausführungsform von Fig. 2 als Bandgießeinrichtung 210.1 ausgebildet. Wie eingangs bereits erläutert, ist für diese zweite Bramme 212 von Bedeutung, dass sie vor Erreichen der Zusammenführungseinrichtung 208 bereits im Wesentlichen durcherstarrt ist.

Die Zusammenführungseinrichtung 208 ist zwischen einerseits den Gießmaschinen 202, 210 und andererseits dem Walzgerüst 206 angeordnet. Mittels der Zusammenführungseinrichtung 208 werden die erste Bramme 204 und die zweite Bramme 212 im warmen Zustand in Richtung zueinander gebracht.

Hierbei wird die zweite Bramme 212 im Bereich der Zusammenführungseinrichtung 208 von oben in Richtung einer oberen Seite der ersten Bramme 204 bewegt.

Im Anschluss an die Zusammenführungseinrichtung 208 werden dann die in Richtung zueinander gebrachten Brammen 204, 212 gemeinsam durch das Walzgerüst 206 bewegt, das hierbei die Funktion einer Walzplattierungseinrichtung ausübt. In gleicher Weise wie bereits zu Fig. 1 erläutert wird mittels dieser Walzplattierungseinrichtung 206 ein Verbund gebildet aus den zusammengeführten Brammen 204, 212 warmgewalzt, sodass damit durch Walzschweißen ein einziges kontinuierliches bandförmiges Verbundmaterial 1 entsteht.

Bei der Ausführungsform von Fig. 2 sind mit "A1" und "A2" Einrichtungen im Auslaufbereich A stromaufwärts der Zusammenführungseinrichtung 208 bezeichnet. Bei diesen Einrichtungen kann es sich um Erwärmungseinrichtungen handeln, mit denen die Temperatur der Brammen 204 und 212 beim Bewegen in Richtung der Zusammenführungseinrichtung 208 gezielt beeinflusst, z.B. erhöht wird. Zur Vermeidung von Wiederholungen in Bezug auf die mögliche Ausgestaltung solcher Einrichtungen A1 und A2 darf auf die Erläuterung von Fig. 1 verwiesen werden.

Bei der zweiten Ausführungsform der vorliegenden Erfindung kann optional ein weiterer Plattierungswerkstoff WP bereitgestellt werden, der in Form eines kontinuierlichen Metallbands von einer Coil-Abwicklungseinrichtung abgewickelt wird. Bei der Ausführungsform gemäß Fig. 2 ist eine solche Coil-Abwicklungseinrichtung 214 derart bezüglich der ersten Gießmaschine 202 angeordnet, dass das von der Coil-Abwicklungseinrichtung 214 abgewickelte Metallband innerhalb der Zusammenführungseinrichtung 208 von unten in Richtung einer unteren Seite der Bramme 204 bewegt wird. In der stromabwärts der Zusammenführungseinrichtung 208 angeordneten Walzplattierungseinrichtung 206 wird dann das Metallband, in seiner Eigenschaft als weiterer Plattierungswerkstoff WP, zusammen mit den beiden Brammen 204, 212 zu dem einzigen kontinuierlichen bandförmigen Verbundmaterial 10 warmgewalzt, dass damit aus insgesamt drei Schichten bzw. Lagen besteht.

Im Zusammenhang mit dem Metallband, dass als weiterer Plattierungswerkstoff WP von der Coil-Abwicklungseinrichtung 214 abgewickelt wird, darf an dieser Stelle gesondert darauf hingewiesen werden, dass hierfür im Auslaufbereich A ebenfalls eine Einrichtung A3 stromaufwärts der Zusammenführungseinrichtung 208 vorgesehen sein kann, vorzugsweise in Form einer Erwärmungseinrichtung, um die Temperatur des abgewickelten Metallbands vor dem Eintritt in die Zusammenführungseinrichtung 208 gezielt zu beeinflussen, vorzugsweise zu erhöhen. Ergänzend und/oder alternativ hierzu bieten sich für diese Einrichtung A3 die weiteren Ausgestaltungen an, die bereits zur Fig. 1 erläutert worden sind.

Bei der Ausführungsform von Fig. 2 sind an einigen Stellen der Vorrichtung 200 Trenneinrichtungen T (z.B. Schere oder Brenner) vorgesehen. Beispielsweise sind diese Trenneinrichtungen T jeweils zwischen einerseits den Gießmaschinen 202, 210 bzw. der Coil-Abwicklungseinrichtung 214 und andererseits der Zusammenführungseinrichtung 208 angeordnet. Diese Trenneinrichtungen T haben den Zweck, dass im Falle einer Funktionsstörung der Vorrichtung 200 störende Anteile der ersten Bramme 204, der zweiten Bramme 212 und/oder ggf. des von der Coil-Abwicklungseinrichtung 214 abgewickelten Metallbands herauszuschneiden und somit aus der Anlage entfernt zu können.

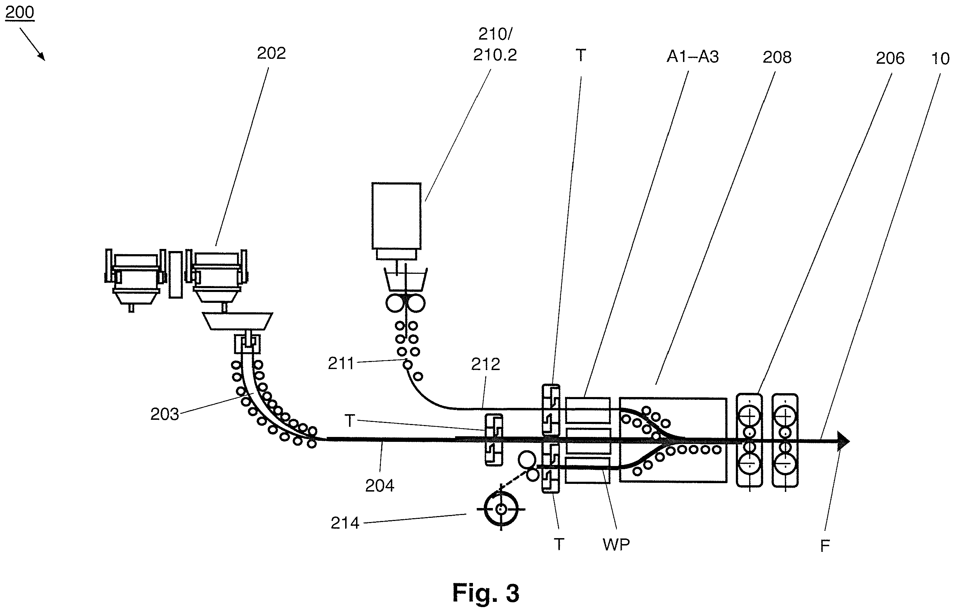

Die Fig. 3 zeigt eine modifizierte Version der zweiten Ausführungsform von Fig. 2, wobei hierbei nun die zweite Gießmaschine 210 in Form einer Rollengießeinrichtung 210.2 ausgebildet ist. Mittels dieser Rollengießeinrichtung 210.2 ist es in gleicher Weise wie mit der Bandgießeinrichtung 210.1 möglich, aus einem erzeugten kontinuierlichen Strang 211 die zweite Bramme 212 zu bilden, die wie erläutert in Richtung der Zusammenführungseinrichtung 208 bewegt wird. Im Übrigen entspricht die Funktionsweise der Version von Fig. 3 identisch jener von Fig. 2, so dass zur Vermeidung von Wiederholungen auf die Erläuterungen an entsprechender Stelle erwiesen werden darf.

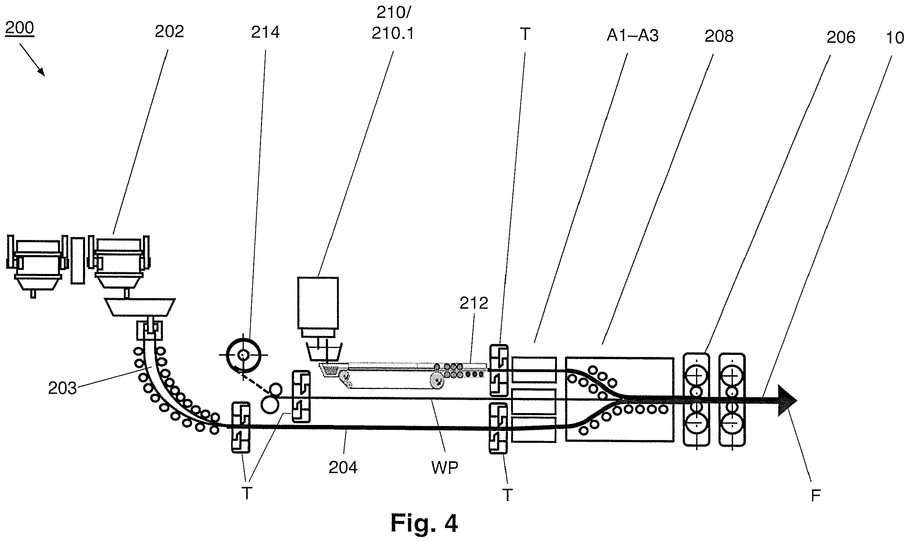

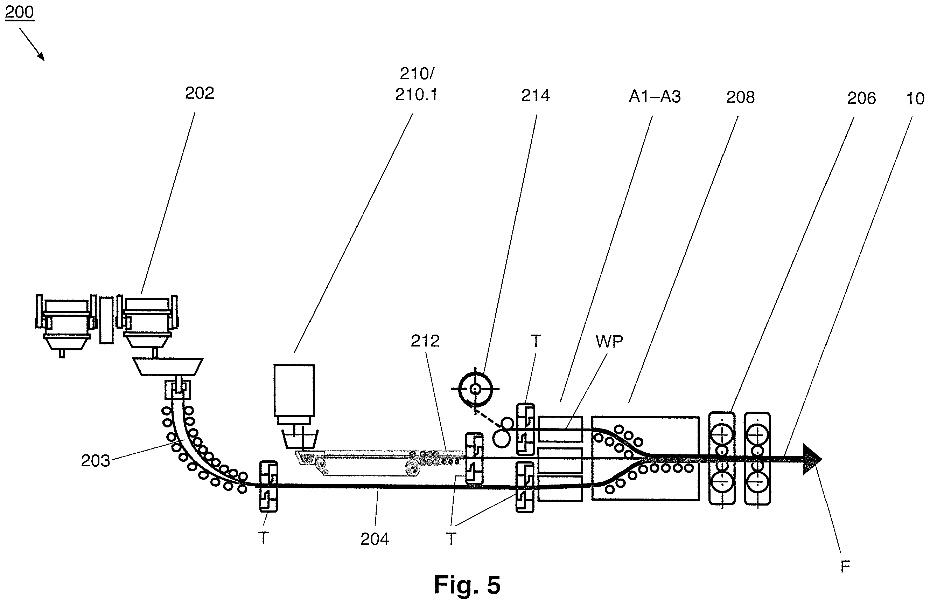

Die Fig. 4 und 5 zeigen weitere Modifikation der zweiten Ausführungsform von Fig. 2, die sich von der Version bzw. Darstellung gemäß Fig. 2 lediglich hinsichtlich der Positionierung der Coil-Abwicklungseinrichtung 214 unterscheiden.

Bei der Version von Fig. 4 ist die Coil-Abwicklungseinrichtung 214 derart relativ zur ersten Gießmaschine 202 angeordnet, dass ein von der Coil-Abwicklungseinrichtung 214 abgewickeltes Metallband im Verfahrensschritt (iii), d.h. beim Zusammenführen mit den beiden Brammen 204, 212 dann von oben in Richtung einer oberen Seite der ersten Bramme 204 bewegt wird. Anders ausgedrückt, wird das Metallband innerhalb der Zusammenführungseinrichtung 208 zwischen den beiden Brammen 204, 212 eingebracht, so dass der weitere Plattierungswerkstoff gebildet aus dem Metallband bei dem fertigen kontinuierlichen bandförmigen Verbundmaterial 10 sich in der Mitte zwischen den beiden anderen Materialpartnern befindet.

Bei der modifizierten Version gemäß Fig. 5 ist die Coil-Abwicklungseinrichtung 214 derart bezüglich der zweiten Gießmaschine 210 (in Form der Bandgießeinrichtung 210.1) angeordnet, dass ein von der Coil-Abwicklungseinrichtung 214 abgewickeltes Metallband im Verfahrensschritt (iii), d.h. beim Zusammenführen mit den beiden Brammen 204, 212 dann von oben in Richtung einer oberen Seite der zweiten Bramme 212 bewegt wird.

Bei allen der Modifikationen gemäß der Fig. 3-5 verhält es sich so, dass das von der Coil-Abwicklungseinrichtung 214 abgewickelte Metallband dann zusammen mit den beiden Brammen 204, 212 durch die Walzplattierungseinrichtung 206 zu einem einzigen kontinuierlichen bandförmigen Verbundmaterial mittels Walzschweißen warmgewalzt bzw. verbunden wird, wobei dieses Verbundmaterial dann insgesamt drei Schichten bzw. Materialpartner aufweist.

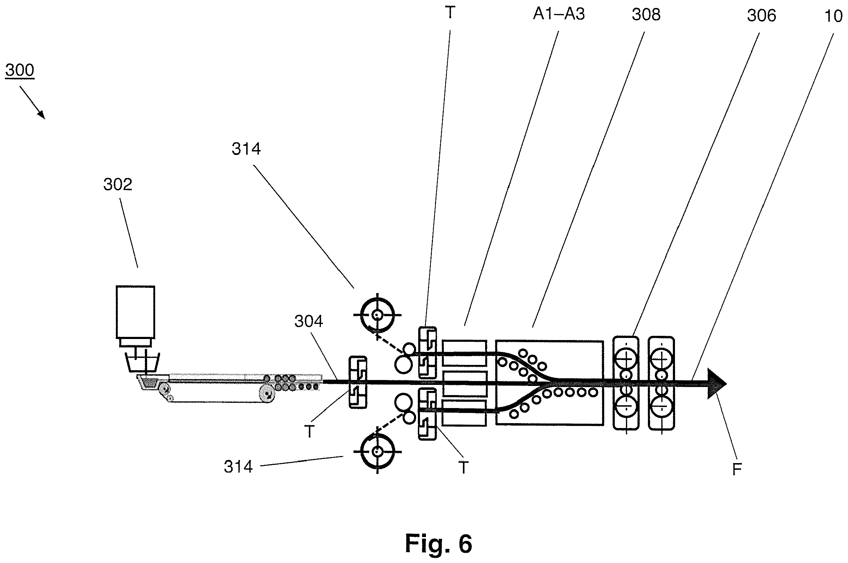

Die Fig. 6 zeigt eine dritte Ausführungsform für eine erfindungsgemäße Vorrichtung 300 zur Herstellung eines kontinuierlichen bandförmigen mehrschichtigen Verbundmaterials. Diese Vorrichtung 300 umfasst eine Gießmaschine 302, wie gezeigt in Form einer Bandgießeinrichtung, mit der ein kontinuierlicher Strang erzeugt wird, aus dem sich dann durch Erstarren eine Bramme 304 bildet.

Die Vorrichtung 300 umfasst des Weiteren - in gleicher Weise wie die erste und zweite Ausführungsform - eine Zusammenführungseinrichtung 308 und zumindest ein Walzgerüst 306, vorzugsweise zwei solcher Walzgerüste, denen auch hier die Funktion einer Walzplattierungseinrichtung zukommt.

Die mittels der Bandgießeinrichtung 302 gebildete Bramme 304 wird in Richtung der stromabwärts hiervon angeordneten Zusammenführungseinrichtung 308 bewegt.

Die Ausführungsform von Fig. 6 umfasst zwei Coil-Abwicklungseinrichtung 314, die jeweils oberhalb und unterhalb der Bandgießeinrichtung 302 bzw. der damit gebildeten Bramme 304 angeordnet sind. Dies hat zur Folge, dass die beiden Metallbänder, die von den Coil-Abwicklungseinrichtungen 314 jeweils abgewickelt und in Richtung der Zusammenführungseinrichtung 308 bewegt werden, dann jeweils von oben in Richtung einer oberen Seite der Bramme 304 und von unten in Richtung einer unteren Seite der Bramme 304 zusammen mit der Bramme in die Zusammenführungseinrichtung 308 einlaufen und an diesen Positionen durch die Walzplattierungseinrichtung 306 zu dem einzigen kontinuierlichen bandförmigen Verbundmaterial warmgewalzt wird.

In Bezug auf alle der vorstehend genannten Ausführungsform der erfindungsgemäßen Vorrichtung 100, 200, 300 darf darauf hingewiesen werden, dass hierbei eine Schutzgas-Einrichtung vorgesehen sein kann, welche die zweite Einrichtung bzw. Gießmaschine 110, 210 vollständig umschließt. Ergänzend und/oder alternativ hierzu ist es möglich, dass eine solche Schutzgas-Einrichtung als Teil der Zusammenführungseinrichtung 108, 208, 308 und/oder als Teil der Walzplattierungseinrichtung 106, 206, 306 vorgesehen ist. Entsprechend ist damit gewährleistet, dass ein Zusammenführen der jeweiligen Materialpartner innerhalb der Zusammenführungseinrichtung und/oder das Walzschweißen des Grundwerkstoffs und des Plattierungswerkstoffs bzw. der jeweiligen Materialpartner in einer Schutzgas-Atmosphäre erfolgen kann, was sich vorteilhaft auf die Qualität des erzeugten Verbundmaterials in Bezug auf eine Haftung der einzelnen Materialpartner aneinander auswirkt.

### Bezugszeichenliste

- 1: stückförmiges mehrschichtiges Verbundmaterial
- 10: kontinuierliches bandförmiges mehrschichtiges Verbundmaterial
- 100, 200, 300: Vorrichtung zur Herstellung eines mehrschichtigen Verbundmaterials
- 101: erste Einrichtung
- 106, 206, 306: Walzgerüst / Walzplattierungseinrichtung
- 108, 208, 308: Zusammenführungseinrichtung
- 110, 210: zweite Einrichtung / zweite Gießmaschine
- 110.1, 210.1: Bandgießeinrichtung
- 112: Bramme
- 202: erste Gießmaschine
- 203: kontinuierlicher Strang aus Metall
- 204: erste Bramme
- 210.2: Rollengießeinrichtung
- 211: kontinuierlicher Strang aus Metall
- 212: zweite Bramme
- 214, 314: Coil-Abwicklungseinrichtung
- 300: Vorrichtung zur Herstellung eines mehrschichtigen Verbundmaterials
- 302: Gießmaschine
- 304: Bramme
- 314: Coil-Abwicklungseinrichtung(en)
- Ai: Einrichtung(en) im Auslaufbereich
- B: Bandtransportlinie
- EG: einzelnes Stück eines Grundwerkstoffs
- EP: einzelne Stück eines Plattierungswerkstoffs
- F: Förderrichtung (für das mehrschichtige Verbundmaterial)
- T: Trenneinrichtung (z.B. Schere oder Brenner)
- WP: weiterer Plattierungswerkstoff

## Patentansprüche

1. Verfahren zur Herstellung eines mehrschichtigen Verbundmaterials (1), aufweisend die Schritte:
(i) Bereitstellen eines Grundwerkstoffs aus Metall, der in Form von einzelnen Stücken (EG) in Richtung einer Zusammenführungseinrichtung (108) bewegt wird,
(ii) Bereitstellen zumindest eines Plattierungswerkstoffs aus Metall, der in Form von einzelnen Stücken (EP) in Richtung der Zusammenführungseinrichtung (108) bewegt wird,
(iii) Zusammenführen eines einzelnen Stücks des Grundwerkstoffs (EG) und eines einzelnen Stücks des Plattierungswerkstoffs (EP) im Bereich der Zusammenführungseinrichtung (108) im warmen Zustand, und
(iv) Warmwalzen der in Richtung zueinander gebrachten Stücke des Grundwerkstoffs (EG) und des Plattierungswerkstoffs (EP), so dass damit durch Walzschweißen ein einziges stückförmiges mehrschichtiges Verbundmaterial (1) bestehend aus dem Grundwerkstoff und dem Plattierungswerkstoff gebildet wird,
**dadurch gekennzeichnet,**
**dass** die einzelnen Stücke des Plattierungswerkstoffs (EP) gemäß Schritt (ii) stromaufwärts der Zusammenführungseinrichtung (108) mittels Trennen, vorzugsweise durch Schneiden oder Brennen, aus einer Bramme (112) gebildet werden, die sich aus einem mit einer Bandgießeinrichtung (110.1) oder mit einer Rollengießeinrichtung (110.2) erzeugten Strang durch Erstarren gebildet hat.

2. Verfahren nach Anspruch 1, **dadurch gekennzeichnet, dass** die einzelnen Stücke des Grundwerkstoffs (EG) gemäß Schritt (i) aus gegossenen Brammen oder gewalzten Bändern bestehen.

3. Verfahren nach Anspruch 1 oder 2, **dadurch gekennzeichnet, dass** der Plattierungswerkstoff im Schritt (ii) durch eine Bandgieß- oder Rollengießeinrichtung (110.1; 110.2) in einer Schutzgas-Atmosphäre erzeugt wird, vorzugsweise, dass das Zusammenführen gemäß Schritt (iii) in einer Schutzgas-Atmosphäre erfolgt, weiter vorzugsweise, dass das Walzschweißen der Stücke des Grundwerkstoffs und des Plattierungswerkstoffs gemäß Schritt (iv) in einer Schutzgas-Atmosphäre erfolgt.

4. Verfahren nach einem der Ansprüche 1 bis 3, **dadurch gekennzeichnet, dass** die einzelnen Stücke des Grundwerkstoffs (EG) und/oder die einzelnen Stücke des Plattierungswerkstoffs (EP) vor dem Schritt (iii) entzundert und/oder gereinigt werden.

5. Vorrichtung (100) zur Herstellung eines mehrschichtigen Verbundmaterials (1), umfassend
eine erste Einrichtung (101), mittels der ein Grundwerkstoff aus Metall in Form von einzelnen Stücken (EG) in Richtung einer Zusammenführungseinrichtung (108) bewegbar ist,
zumindest ein Walzgerüst (106), das in Linie mit der ersten Einrichtung (101) und stromabwärts hiervon angeordnet ist,
eine zweite Einrichtung (110) zum Bereitstellen von einzelnen Stücken eines Plattierungswerkstoffs aus Metall (EP), wobei einzelne Stücke des Plattierungswerkstoffs (EP) in Richtung der Zusammenführungseinrichtung (108) bewegbar sind, wobei die zweite Einrichtung (110; 110.1; 110.2) in Linie mit dem Walzgerüst (106) und stromaufwärts hiervon angeordnet ist,
wobei die Zusammenführungseinrichtung (108) zwischen einerseits der ersten bzw. zweiten Einrichtung (101; 110) und andererseits dem Walzgerüst (106) angeordnet ist, wobei mittels der Zusammenführungseinrichtung (108) ein Stück des Grundwerkstoffs (EG) und ein Stück des Plattierungswerkstoffs (EP) im warmen Zustand in Richtung zueinander bringbar sind,
wobei das Walzgerüst (106) als Walzplattierungseinrichtung ausgebildet ist, mittels der ein Verbund gebildet aus den zusammengeführten Stücken des Grundwerkstoffs (EG) und des Plattierungswerkstoffs (EP) warmwalzbar ist, so dass damit durch Walzschweißen ein einziges mehrschichtiges Verbundmaterial (1) bestehend aus dem Grundwerkstoff und dem Plattierungswerkstoff entsteht,
**dadurch gekennzeichnet,**
**dass** die zweite Einrichtung (110) durch eine Bandgießeinrichtung (110.1) oder durch eine Rollengießeinrichtung (110.2) ausgebildet ist, mit der durch Gießen des Plattierungswerkstoffs ein Strang erzeugt wird, aus dem sich durch Erstarren eine Bramme (112) bildet, wobei zwischen einerseits der Bandgieß- bzw. Rollengießeinrichtung (110.1; 110.2) und andererseits der Zusammenführungseinrichtung (108) Trennmittel (T) insbesondere in Form einer Schere angeordnet sind, mittels der die im Wesentlichen erstarrte Bramme (112) stromaufwärts der Zusammenführungseinrichtung (108) zu einzelnen Stücken des Plattierungswerkstoffs (EP) vereinzelbar ist.

6. Verfahren zur Herstellung eines kontinuierlichen bandförmigen mehrschichtigen Verbundmaterials (10), aufweisend die Schritte:
(i) Erzeugen eines kontinuierlichen Strangs (203) insbesondere aus Stahl mit einer ersten Gießmaschine (202), wobei dieser Strang (203) bzw. eine daraus durch Erstarren gebildete erste Bramme (204) im Wesentlichen horizontal in Richtung einer Zusammenführungseinrichtung (208) bewegt wird,
(ii) Erzeugen eines weiteren kontinuierlichen Strangs aus Metall mit einer zweiten Gießmaschine (210),
(iii) Zusammenführen von Brammen (204; 212), die sich aus den Strängen, die mit der ersten Gießmaschine (202) und mit der zweiten Gießmaschine (210) erzeugt worden sind, durch Erstarren gebildet haben, im warmen Zustand, wobei die mit der zweiten Gießmaschine (210) erzeugte zweite Bramme (212) im Bereich der Zusammenführungseinrichtung (208) von oben in Richtung einer oberen Seite der mit der ersten Gießmaschine (202) erzeugten Bramme (204) bewegt wird, und
(iv) Warmwalzen eines Verbunds gebildet aus den zusammengeführten Brammen (204, 212), so dass damit kontinuierlich durch Walzschweißen ein einziges kontinuierliches bandförmiges Verbundmaterial (10) entsteht,
**dadurch gekennzeichnet,**
**dass** die zweite Gießmaschine (210) durch eine Bandgießeinrichtung (210.1) oder durch eine Rollengießeinrichtung (210.2) ausgebildet ist, mit der ein kontinuierlicher Strang aus Metall erzeugt wird, der vor dem Schritt (iii) im Wesentlichen vollständig erstarrt ist.

7. Verfahren nach Anspruch 6, **dadurch gekennzeichnet, dass** gemäß Schritt (ii) das Erzeugen eines weiteren kontinuierlichen Strangs aus Metall durch die zweite Gießmaschine (210) in einer Schutzgas-Atmosphäre erfolgt, vorzugsweise, dass das Zusammenführen der Brammen (204, 212) gemäß Schritt (iii) in einer Schutzgas-Atmosphäre erfolgt, weiter vorzugsweise, dass das Walzschweißen der zusammengeführten Brammen (204, 212) gemäß Schritt (iv) in einer Schutzgas-Atmosphäre erfolgt.

8. Verfahren nach Anspruch 6 oder 7, **dadurch gekennzeichnet, dass** die erste Bramme (204), die sich aus dem mit der ersten Gießmaschine (202) erzeugten Strang (203) durch Erstarren gebildet hat, und/oder die zweite Bramme (212), die sich aus dem mit der zweiten Gießmaschine (210) erzeugten Strang durch Erstarren gebildet hat, vor dem Schritt (iii) entzundert und/oder gereinigt wird.

9. Verfahren nach einem der Ansprüche 6 bis 8, **dadurch gekennzeichnet, dass** ein weiterer Plattierungswerkstoff (WP) aus Metall bereitgestellt wird, der in Form eines kontinuierlichen Metallbands von einer Coil-Abwicklungseinrichtung (214) abgewickelt wird, wobei das Metallband im Schritt (iii) von unten in Richtung einer unteren Seite oder von oben in Richtung einer oberen Seite der mit der ersten oder zweiten Gießmaschine (202; 210) erzeugten Bramme (204; 212) bewegt wird und anschließend das Metallband im Schritt (iv) zusammen mit den beiden Brammen (204; 212) zu dem einzigen kontinuierlichen bandförmigen Verbundmaterial (10) warmgewalzt wird.

10. Verfahren nach einem der Ansprüche 1 bis 4 oder nach einem der Ansprüche 6 bis 9, **dadurch gekennzeichnet, dass** die zweite Bramme (112; 212), die sich aus dem mit der Band- oder Rollengießeinrichtung (110.1, 110.2) erzeugten Strang des Plattierungswerkstoffs bzw. aus dem mit der zweiten Gießmaschine (210) in Form der Band- oder Rollengießeinrichtung (210.1; 210.2) erzeugten Strang durch Erstarren gebildet hat, vor dem Schritt (iii) gewalzt wird.

11. Vorrichtung (200) zur Herstellung eines kontinuierlichen bandförmigen mehrschichtigen Verbundmaterials (10), umfassend
eine erste Gießmaschine (202), mit der ein kontinuierlicher Strang (203) insbesondere aus Stahl erzeugt wird,
zumindest ein Walzgerüst (206), das in Linie mit der ersten Gießmaschine (202) und stromabwärts hiervon angeordnet ist, wobei eine durcherstarrte erste Bramme (204) des mit der ersten Gießmaschine (202) erzeugten Strangs (203) warmwalzbar ist,
eine zweite Gießmaschine (210), mit der ein weiterer kontinuierlicher Strang aus Metall erzeugt wird, wobei diese zweite Gießmaschine (210) in Linie mit dem Walzgerüst (206) und stromaufwärts hiervon angeordnet ist, und
eine Zusammenführungseinrichtung (208), die zwischen einerseits den Gießmaschinen (202; 210) und andererseits dem Walzgerüst (206) angeordnet ist, wobei mittels der Zusammenführungseinrichtung (208) eine erste Bramme (204), die sich aus einem mit der ersten Gießmaschine (202) erzeugten Strang (203) durch Erstarren gebildet hat, und eine zweite Bramme (212), die sich aus einem mit der zweiten Gießmaschine (210) erzeugten Strang durch Erstarren gebildet hat, im warmen Zustand in Richtung zueinander bringbar sind,
wobei das Walzgerüst (206) als Walzplattierungseinrichtung ausgebildet ist, mittels der ein Verbund gebildet aus den zusammengeführten Brammen (204, 212) warmwalzbar ist, so dass damit durch Walzschweißen ein einziges kontinuierliches bandförmiges Verbundmaterial (10) entsteht,
**dadurch gekennzeichnet,**
**dass** die zweite Gießmaschine (210) durch eine Bandgießeinrichtung (210.1) oder durch eine Rollengießeinrichtung (210.2) ausgebildet ist, vorzugweise, dass die Bandgießeinrichtung (210.1) oder Rollengießeinrichtung (210.2) oberhalb der sich aus dem durch die erste Gießmaschine (202) erzeugten Strang (3) durch Erstarren gebildeten ersten Bramme (204) angeordnet ist, so dass die zweite Bramme (212), die sich aus dem durch die Bandgießeinrichtung (210.1) oder Rollengießeinrichtung (210.2) erzeugten Strang durch Erstarren gebildet hat, im Bereich der Zusammenführungseinrichtung (208) von oben in Richtung einer oberen Seite der durch die erste Gießmaschine (202 erzeugten zweiten Bramme (204) bewegbar ist.

12. Vorrichtung (200) nach Anspruch 11, **dadurch gekennzeichnet, dass** in Linie mit der Zusammenführungseinrichtung (208) und stromaufwärts hiervon eine Coil-Abwicklungseinrichtung (214) vorgesehen ist, von der ein Plattierungswerkstoff (WP) aus Metall in Form eines kontinuierlichen Metallbands abwickelbar ist, wobei die Coil-Abwicklungseinrichtung (214) unterhalb der sich aus dem durch die erste Gießmaschine (202) erzeugten Strang (203) durch Erstarren gebildeten ersten Bramme (204) angeordnet ist, so dass das Metallband im Bereich der Zusammenführungseinrichtung (208) von unten in Richtung einer unteren Seite der mit der ersten Gießmaschine (202) erzeugten ersten Bramme (204) bewegbar ist und anschließend zusammen mit den beiden Brammen (204, 212) durch das als Walzplattierungseinrichtung ausgebildete Walzgerüst (206) warmwalzbar ist.

13. Vorrichtung (100; 200) nach Anspruch 5 oder nach einem der Ansprüche 11 oder 12, **gekennzeichnet durch** eine Schutzgas-Einrichtung, welche die zweite Einrichtung bzw. Gießmaschine (110; 210) in Form der Bandgieß- oder Rollengießeinrichtung vollständig umschließt und/oder die als Teil der Zusammenführungseinrichtung (108; 208) und/oder als Teil der Walzplattierungseinrichtung (106; 206) vorgesehen ist.

14. Vorrichtung (100; 200) nach einem der Ansprüche 5 oder nach einem der Ansprüche 11 bis 13, **dadurch gekennzeichnet, dass** zwischen einerseits der zweiten Einrichtung bzw. Gießmaschine (110, 210) in Form der Bandgieß- oder Rollengießeinrichtung und andererseits der Zusammenführungseinrichtung (108; 208) zumindest ein Walzgerüst angeordnet ist.

15. Vorrichtung (100; 200) nach Anspruch 5 oder nach einem der Ansprüche 11 bis 14, **dadurch gekennzeichnet, dass** stromaufwärts der Zusammenführungseinrichtung (108; 208) zumindest eine Entzunderungseinrichtung (A1; A2; A3) angeordnet ist.
